# EUROPEAN PATENT SPECIFICATION

(11) **EP 4 390 084 B1**
(45) Date of publication and mention of the grant of the patent: **04.02.2026**
(21) Application number: 22215418.9
(22) Date of filing: 21.12.2022
(51) Int. Cl.: F02B 39/10

(54) **POWER CONNECTOR FOR TURBOMACHINE**
STROMANSCHLUSS FÜR TURBOMASCHINE
CONNECTEUR DE PUISSANCE POUR TURBOMACHINE

(43) Date of publication of application: 26.06.2024
(73) Proprietor: Garrett Transportation I Inc., Torrance, CA 90504 (US)
(72) Inventor: Nejedly, Milan, Torrance, California 90504 (US); Koplik, Petr, Torrance, California 90504 (US); Houst, Vit, Torrance, California 90504 (US)
(74) Representative: Ingrassia, Fisher & Lorenz UK Ltd.

(56) References cited:
- EP-A1- 2 039 932
- US-A1- 2019 120 125
- US-A1- 2020 135 377

## Description

### TECHNICAL FIELD

The present disclosure generally relates to a turbomachine and, more particularly, relates to a turbomachine with an electrical assist unit having a power connector associated therewith.

### BACKGROUND

Various systems are provided for boosting intake charge pressure. For example, turbomachines (e.g., turbochargers, superchargers, motorized turbomachines, turbogenerators, etc.) may extract energy mechanically using a rotating shaft. In some arrangements, such as with a turbocharger including a compressor and a turbine attached to a shaft, this energy is extracted from the exhaust of an internal combustion engine, which causes rotation of the shaft and a boost in intake charge pressure (such as intake air pressure) by the compressor. As another example, a supercharger may boost intake charge pressure using a compressor powered by energy extracted from a drive shaft or similar. Turbomachines are known from EP 2 039 932 A1 and US 2019/120125 A1.

Recently, it has been realized that certain advantages can be achieved using an electric compressor. For example, electric compressors can improve the dynamic response of the system and provide an on-demand boost that can mitigate against high amounts of transient emissions and reduce turbocharge lag.

In order for an electric compressor to operate, it is necessary to supply the electric compressor with electrical energy. This electrical energy may be provided via a battery, where battery cables are connected to a power connector of the electric compressor. One type of power connector is the bolted power connecter, in which the cables from a battery are fixed onto bolts of the power connector using nuts via a screwed connection.

It is desirable to provide bolted power connectors with an improved service lifespan. Other desirable features and characteristics of the present disclosure will become apparent from the subsequent detailed description and the appended claims, taken in conjunction with the accompanying drawings and this background discussion.

### BRIEF SUMMARY

In one embodiment, a power connector is provided. The power connector allows for connection of a power source to an electric assist unit of a compressor, for example a compressor of an internal combustion engine. The power connector includes first and second bolts, wherein the first and second bolts each comprise a base body and a shank, the shank having a thread formed on an outer surface thereof; and a housing connected to the first and second bolts. The base bodies of the first and second bolts comprise gradual transitions from each side of the base body to another side, each gradual transition having a radius of curvature. A diagonal gap of uniform width is present between the base bodies of the first and second bolts.

In another embodiment, a method of manufacturing the power connector is provided. The method includes forming the bolts of the power connector; and connecting the bolts to the housing of the power connector

In an additional embodiment, an e-assist turbocharger is disclosed. The e-assist turbocharger includes a housing; a rotating group including a shaft, a first wheel member fixed to the shaft, a second wheel member; an electric assist unit configured to rotate the rotating group; a power source comprising cables, and the power connector described above, wherein the power connector is arranged to electrically connect cables of the power source to the electric assist unit.

### BRIEF DESCRIPTION OF THE DRAWINGS

The present disclosure will hereinafter be described in conjunction with the following drawing figures, wherein like numerals denote like elements, and wherein:
FIG. 1 is a schematic illustration of an engine system with a conventional turbocharger;
FIG. 2 is a schematic illustration of an engine system with a turbocharger with an electrical assist unit for powering a compressor of the turbocharger;
FIG. 3 shows a power connector not forming part of the present invention;
FIG. 4A, 4B and 4C are other views of the power connector of FIG. 3;
FIG 5 shows stress concentrators for the power connector of FIG. 3;
FIG. 6 shows parts of a power connector in accordance with an embodiment of the invention;
FIG. 7 shows a comparison between parts of the power connector of FIG. 3 and parts of the power connector of FIG. 6;
FIG. 8 shows another comparison between parts of the power connector of FIG. 3 and parts of the power connector of FIG. 6;
FIG. 9 shows finite element analysis plots of stress values in the power connector of FIG. 3 and the power connector of FIG. 6;
FIGs 10A, 10B, 10C and 10D show alternative views of the power connector of FIG. 6; and
FIG. 11 shows a flowchart of a method in accordance with embodiments of the present invention.

### DETAILED DESCRIPTION

The following detailed description is merely exemplary in nature and is not intended to limit the present disclosure or the application and uses of the present disclosure. Furthermore, there is no intention to be bound by any theory presented in the preceding background or the following detailed description.

Broadly, example embodiments disclosed herein provide an improved power connector for connecting a power source to an electric assist unit of a compressor of an internal combustion engine. Embodiments also include improved methods of manufacturing turbomachines with the improved electric compressor. The embodiments of the power connector as described herein typically improve manufacturing efficiency, improve the serviceable lifespan of the power connector, and have additional benefits as will be described below.

In some embodiments, the power connector is a power connector for connecting a power source to an electric assist unit of a compressor of an internal combustion engine. The power connector includes first and second bolts, wherein the first and second bolts each comprise a base body and a shank, the shank having a thread formed on an outer surface thereof; a housing connected to the first and second bolts. The base bodies of the first and second bolts comprise gradual transitions from each side of the base body to another side, each gradual transition having a radius of curvature. A diagonal gap of uniform width is present between the base bodies of the first and second bolts.

As discussed below, other embodiments of the present disclosure may include at least some of these components, and they may be configured and arranged differently without departing from the scope of the present disclosure.

The above-described power connector provides a number of advantages. In particular, when power cables of a battery are connected to an electric assist unit for a compressor using a bolted power connector, high tightening forces are used. For example, a tightening torque of 20 Nm is typically applied when an M8-sized bolted connection is used to connect these power cables to the electric assist unit, and other high tightening torques are similarly used with other sizes of bolted connections. It has been recognized by the present inventors that the use of this high tightening torque may cause micro-fractures or other defects in various locations of the power connector which can act as crack initiators which, over the multiple thermal cycles that will experienced during operation of an electric assist unit for a compressor, cause propagation of thermal cracks. Increased thermal cracking reduces the useful service life of the power connector.

After recognition of this problem, an investigation was performed by the present inventors to determine how to reduce the impact of this high tightening torque upon the service life of the power connector. Although it was recognized that it was possible to alter many different parameters to reduce the impact of this tightening torque (such as changing the size of the bolts used to connect the battery cables to the power connector, changing the materials used in the manufacture of the power connector, changing the connection method, and so on), after intensive investigation it was determined that altering the shape of the bolts of the power connector would provide the benefit of reducing the effect of tightening torque on the service life of the power connector whilst also maintaining a low overall cost and high efficiency of manufacture.

However, as will be explained in more detail below, once it was determined that altering the shape of the bolts could reduce the mechanical stress in the power connector imparted by the tightening torque to thereby reduce the impact of the tightening torque on the service lifespan of the power connector, another problem was recognized. In particular, the most optimal shape of the bolts, from the perspective of attempting to lower the mechanical stresses in the power connector imparted by the tightening torque, was not suitable from an electrical perspective. The bolts of the power connector form part of the electrical path from the battery to the electric assist unit, and therefore the bolts must allow for sufficient conduction of the electrical energy without introducing sources of electrical loss, such as allowing for arcing of electrical energy between the bolts.

After further investigative effort, it was determined that a design of the bolts as disclosed herein allowed for a reduction in the stress imparted to locations around the power connector by the tightening torque during connection of the power source to the power connector. This reduction in the imparted tightening torque was sufficient to reduce the amount of defects that act as crack initiators to thereby improve the service life of the power connector, whilst still allowing for a good conduction of electrical energy from the power source to the electric assist unit without introducing sources of substantial electrical loss. The design of the bolts will be explained in more detail below.

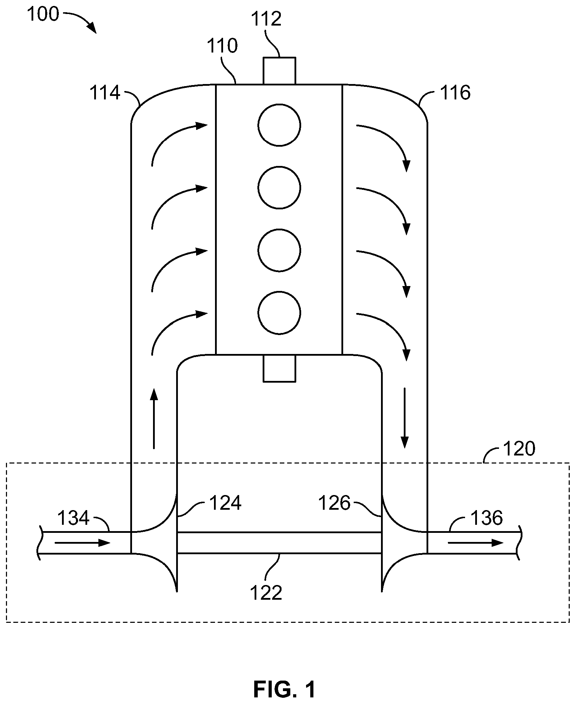

FIG. 1 is a schematic view of a known system 100 including an internal combustion engine 110 and turbocharger 120 without an electric compressor associated therewith. The internal combustion engine 110 includes an engine block housing one or more combustion chambers that operatively drive a shaft 112. As shown in FIG. 1, an intake port 114 provides a flow path for a combustion gas, for example air, to the engine block while an exhaust port 116 provides a flow path for exhaust from the engine block. The turbocharger 120 acts to extract energy from the exhaust and to use this energy to boost intake charge pressure, for example the pressure of the combustion gas. As shown in FIG. 1, the turbocharger 120 includes a shaft 122 having a compressor 124, a turbine 126, an intake 134 and an exhaust outlet 136. Exhaust from the engine 110 is diverted to the turbine 126 and causes the shaft 122 to rotate, which, in turn, rotates the compressor 124. When rotating, the compressor 124 produces a "boost" in combustion gas pressure (e.g., force per unit area) which is known as "boost pressure". In this manner, a turbocharger may help to provide a larger mass of combustion gas to the engine, which allows for greater engine output during combustion.

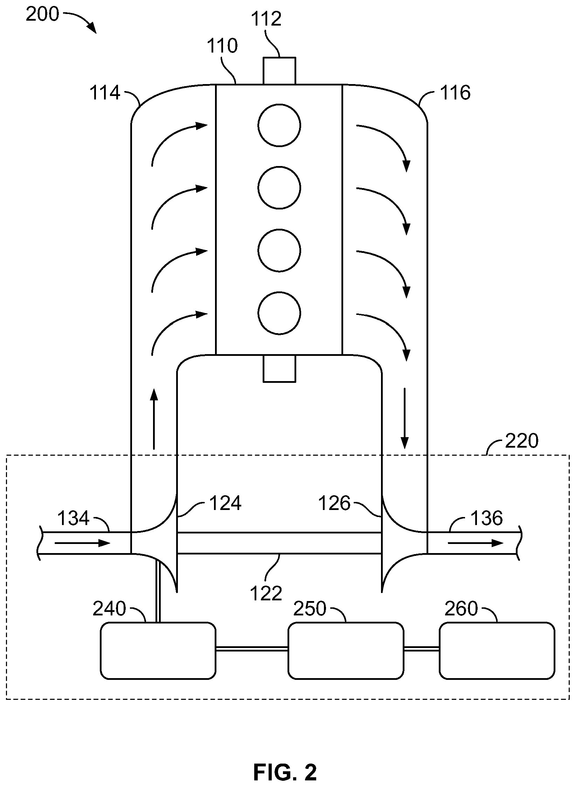

Turning to FIG. 2, an exemplary system 200 is shown including a turbocharger 220 and an internal combustion engine 110. The turbocharger includes a combustion gas inlet 134, a shaft 122, a compressor 124, a turbine 126, and an electric assist unit 240 associated with the compressor 124. The electric assist unit 240 is electrically connected to a power source 250. In some embodiments, the power source 250 comprises a battery, such as a 48V battery, and the electrical assist unit 240 comprises a +7kw motor. In some embodiments, the power source 250 is operably connected to a generator 260. In some embodiments, the generator 260 may be powered by the internal combustion engine 110. In alternative embodiments, the generator 260 may be powered by a separate power source (not shown). In the exemplary system 200, the electrical assist unit 240, at least in part, powers the compressor 124. This is different to the arrangement in FIG. 1, where exhaust from the engine 110 completely powers the compressor 124. Using the electrical assist unit 240 to power the compressor 224 allows for a reduction in the phenomenon known as turbocharger lag and also improves the dynamic response of the turbocharger.

As will be appreciated, the amount of power needed to power the compressor 124 for effectively increasing the boost pressure is relatively large, and typically beyond the capability of conventional 12V car batteries. As such, in an embodiment, a dedicated power source 250 is used to power the electric assist unit 240. In order to transmit the electrical power from the power source 250 to the electric assist unit 240, a power connector may be used. A power connector may also be used to connect a non-dedicated power source (such as the 12V car battery - not shown) to the electric assist unit 240.

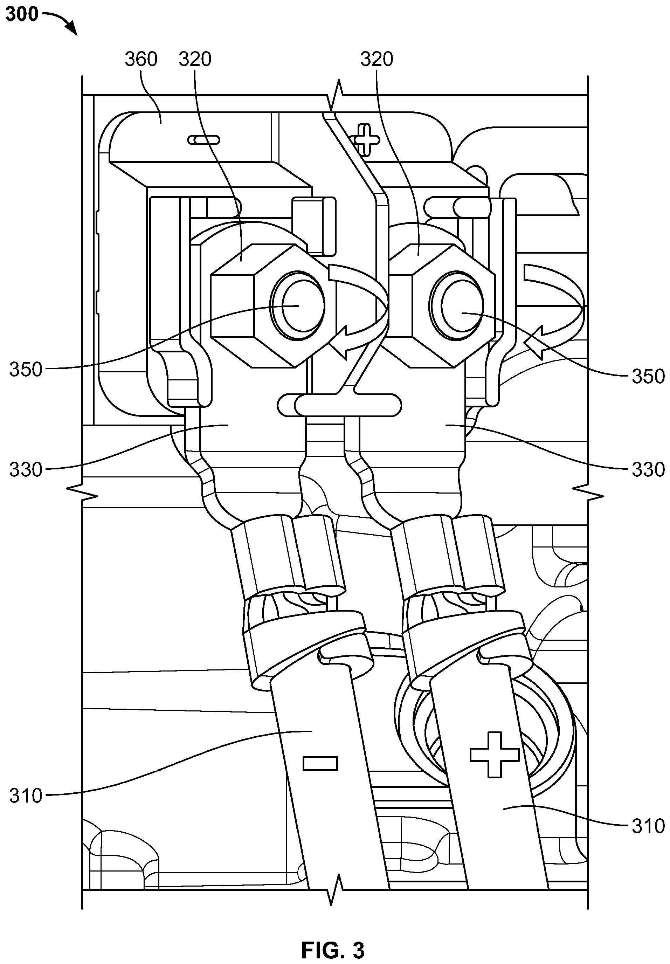

A power connector 300 not according to the present invention is shown in FIG. 3. As can be seen in FIG. 3, cables 310 of the power source, for example a dedicated 48V battery, are connected to a power connector 300 using nuts 320 that compress cable connectors 330 to bolt bases (not shown in this figure) of bolts. The nuts 320 are screwed onto shanks 350 of the bolts, which shanks 350 have a thread disposed on at least part of their exterior surface so as to allow for a screwed connection to be formed with corresponding threads disposed on at least part of an interior surface of the nuts 320.

The power connector 300 also includes a housing 360. The housing 360 may be formed of a material that has a lower tensile strength and/or fracture strength than the bolts 340, to allow for improved ease of manufacturing, for example a plastic such as nylon. When the housing 360 is formed from a moldable plastic, the housing 360 may be overmolded onto metal bolts.

In such a power connector 300, it was recognized by the inventors that the tightening torque, illustrated with arrows in FIG. 3, that is used to screw and tighten the nuts 320 onto the shanks 350 of the bolts is likely to cause micro-fractures and/or other structural deformities in the power connector 300 that can later act as crack initiation points that can cause crack propagation during the thermal cycling the power connector 300 will undergo during the operation of the electric assist unit and compressor. For example, the tightening torque may cause defects, micro-fractures and/or structural deformities in the housing 360 of the power connector 300, which housing 360 may have a lower tensile and/or fracture strength than the bolts of the power connector 300. These defects or structural deformities in the housing 360 may cause a higher likelihood of cracking in the housing 360 during thermal cycling of the power connector during operation as compared to the bolts themselves.

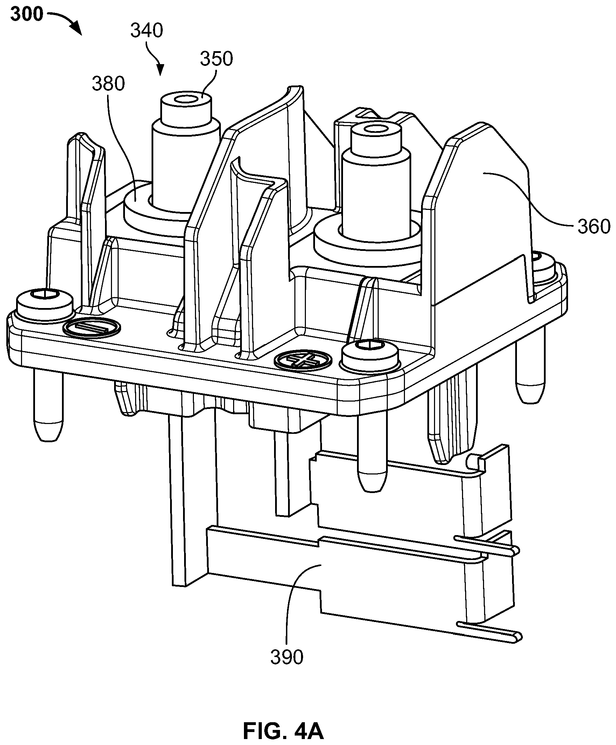

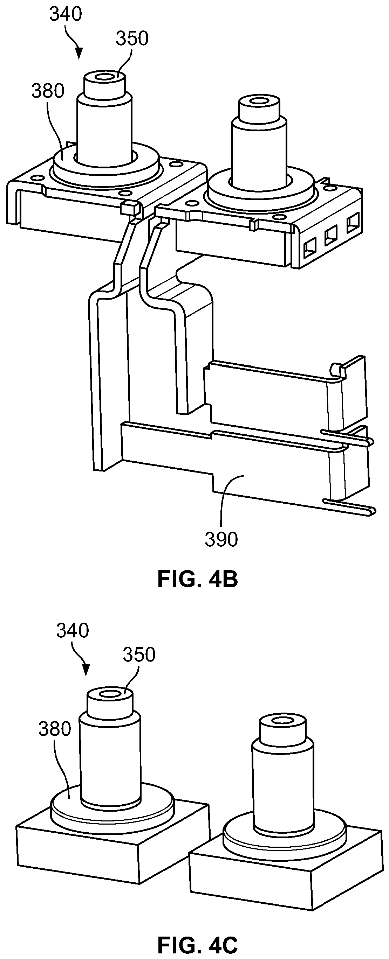

Other views of the power connector 300 are shown in FIG 4A, 4B and 4C. In FIG. 4A, the power connector 300 including both the housing 360 and bolts 340 is shown, together with the connection of the bolts 340 to power frames 390 within the electric assist unit, which power frames 390 do not form part of the power connector 300. The bolts 340 include both a shank 350 and a base body 380.

In FIG. 4B, the bolts 340 of the power connector 300 are shown as being connected to the power frames 390 without the housing being present. During assembly the power frames 390 can be welded to the base bodies of the bolts or simply placed on the base bodies. The power frames 390 may be constructed from copper.

In FIG. 4C, the bolts 340 of the power connector 300 are shown in isolation.

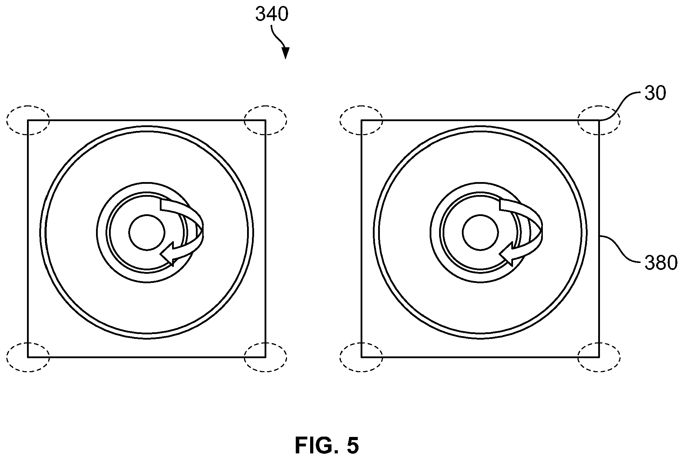

In order to determine how to reduce the likelihood of such defects, micro-fractures or structural deformities being formed during the tightening of the nuts 320 to the bolts 340, the present inventors performed investigative efforts, including performing a finite element computational analysis to determine where the stress caused by this tightening torque would be concentrated. Referring now to FIG. 5, the result of these investigative efforts revealed that the corners 30 of the base bodies 380 of the bolts acted as stress concentrators during the application of the tightening torque used to attach the nuts to the bolts 340, which increased the likelihood that this tightening torque results in defects or other crack initiators being formed in the housing 360 of the power connector that would be likely to reduce the service lifespan of the power connector 300. As used herein and as known in the art, the term 'stress concentrator' refers to a point or area in the design where the stress is significantly higher than in surrounding areas of the part.

After further investigative efforts, it was determined that introducing gradual transitions at the corners 30 of the base bodies 380 allowed for easing of the transition from one side of the base body to another, and consequently reduced the stress concentrations caused by the corners 30 of the base bodies 380.

However, during implementation, it was discovered that the most optimum design of the base bodies 380, from the perspective of reducing stress concentrations in the power connector, was not feasible due to the electrical properties of this design. In particular, the gradual transitions around the corners of the base bodies caused the sides of the base bodies 380 to be close enough together to cause electrical losses, such as arcing between the base bodies 380, to be introduced into the system.

In order to overcome this subsequent problem associated with the new design, additional investigative efforts were performed in order to arrive at an improved design which sufficiently reduced stress concentration in the power connector to increase the service lifespan of the power connector whilst reducing the amount of electrical losses introduced into the system by the new design and to ensure that the power connector was compact in size.

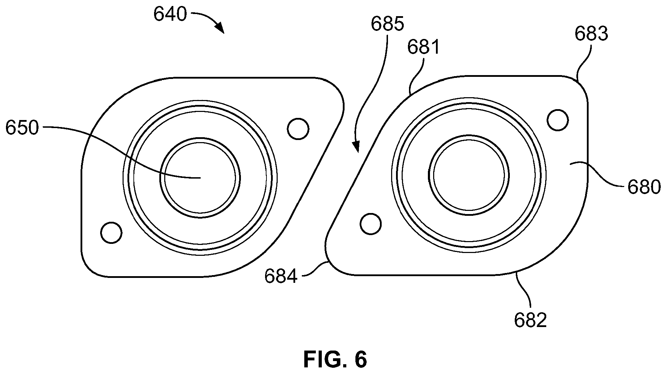

The outcome of these investigative efforts is shown in FIG. 6. As can be seen in FIG. 6, which shows the bolts 640 of a power connector according to the present invention, the base bodies 680 of the bolts 640 have gradual transitions from one side of the base body 680 to another. In various embodiments, the base bodies 680 may have cam-shaped topologies, such as a symmetric pear cam shape, a non-symmetric pear cam shape, an eccentric cam shape, an elliptical cam shape, a symmetric egg cam shape or a non-symmetric egg cam shape. In a preferred embodiment, such as the embodiment shown in FIG. 6, part of one base body extends beyond a part of the other base body in a plane when viewed from an axis parallel to the shanks 650, such that an overlap is created in this plane. Such an overlap allows for particularly effective stress reduction in the power connector.

Additionally, as can be seen in FIG. 6, a diagonal gap 685 of uniform width is present between the two base bodies 680. The inclusion of such a diagonal gap 685 allows for gradual transitions of the corners of the base bodies 680 to reduce the stress concentrations in the power connector during application of a tightening torque whilst still allowing for the prevention of the introduction of sources of electrical losses, such as arcing, into the design as a result of the new gradual transitions. It was further discovered that a non-diagonal gap of uniform width between the base bodies was less preferred, from a stress concentration reduction perspective, as compared to a diagonal gap 685. As used herein, a diagonal gap refers to a gap between the base bodies 680 that has a first end of the gap located closer to the shank 650 of a first one of the bolts 640 as compared to the shank 650 of a second one of the bolts 640, and has a second end of the gap located closer to the shank 650 of the second one of the bolts 640 as compared to the shank 650 of the first one of the bolts 640.

Preferably, the diagonal gap 685 has a uniform width that is, at a minimum, approximately the same size as half of the width of the nuts 320 screwed onto the shanks 650 of the bolts 640. It has been shown by the present inventors that a diagonal gap 685 of this width is the minimum needed to prevent arcing between the bolts 640 when the power source is a battery of around 48V. A diagonal gap 685 of this width therefore allows for a compact power connector design that still ensures that sources of major electrical loss are not introduced into the design. In the case of a M8 connecting nut, which has a width of around 8mm, the minimum width of the diagonal gap 685 is around 4mm.

With the base body corners being replaced by gradual transitions and with the inclusion of a diagonal gap 685 of uniform width positioned between the two base bodies 680, it was found that an improved stress concentration reduction was achieved to thereby improve the service life of the power connector whilst still ensuring that sources of electrical losses, such as arcing, are not introduced into the electrical path through the power connector.

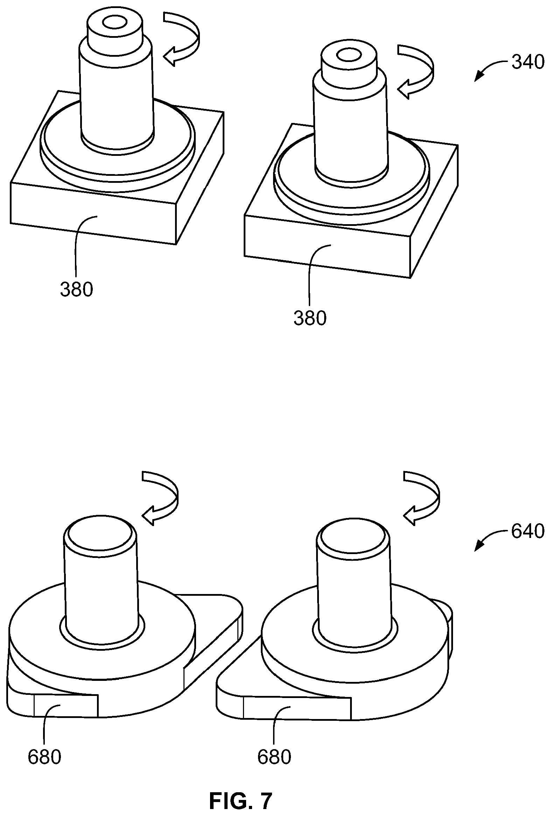

FIG. 7 shows a comparison of the bolts 340 and associated base bodies 380 of the power connector shown in FIG. 3 and the improved bolts 640 and associated base bodies 680 of the power connector shown in FIG. 6 according to embodiments of the present invention.

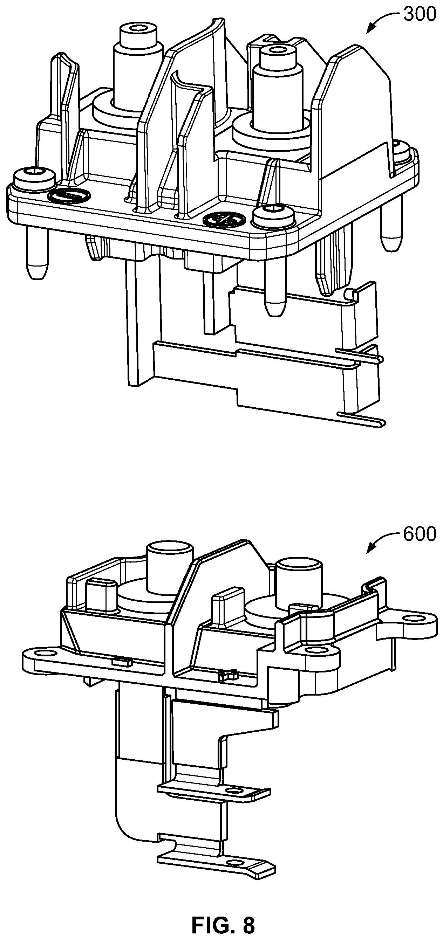

FIG. 8 shows a comparison of the power connector 300 shown in FIG. 3 and the improved power connector 600 according to embodiments of the present invention.

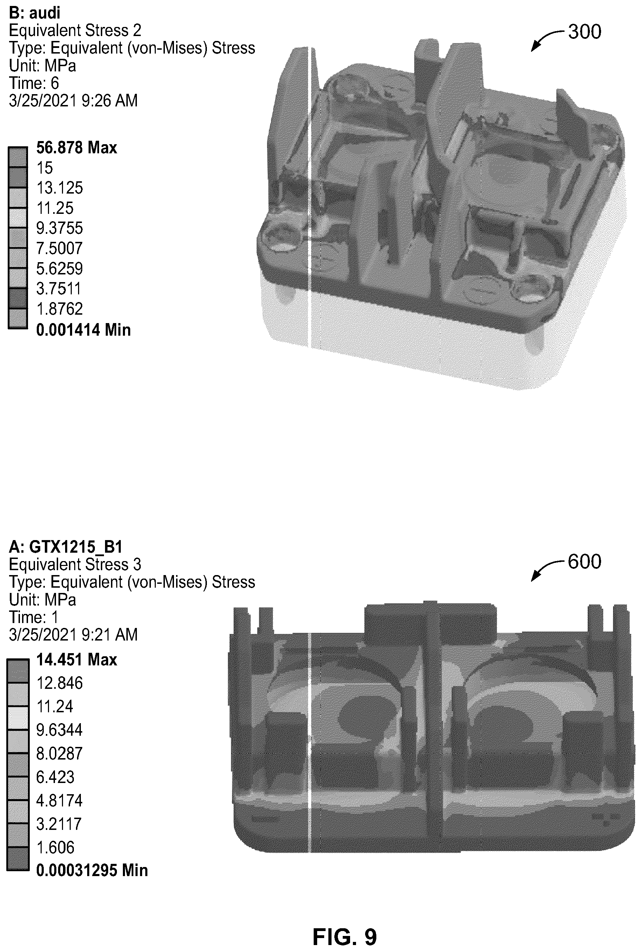

FIG. 9 shows finite element analysis models of the power connector 300 shown in FIG. 3 and the improved power connector 600 according to embodiments of the present invention. Each of the models shown in FIG. 9 shows areas of stress for the respective power connector model in Mega Pascals (MPa). As can be seen from the models of FIG. 9, the maximum amount of stress incurred during a tightening torque of 20 Nm on a shank in the power connector 300 shown in FIG. 3 was 56.878 MPa. In contrast, the maximum amount of stress incurred during a tightening torque of 20 Nm on a shank in the improved power connector 600 according to embodiments of the present invention was only 14.451 MPa.

After experimental testing, it has been noted that with a design of power connector according to embodiments of the present invention, an improvement of service life of around 75% of the power connector can be achieved. In addition, the base bodies 680 of the bolts 640 of the improved power connector may be constructed with a reduced height as compared to the bolts with square-type base bodies 380, as shown in the power connector 300 shown in FIG. 3, thereby allowing for a more compact power connector.

In addition, it was also noted that the improved power connector 600 according to various embodiments also reduces stress concentration in the power connector 600 arising from the tensile load placed upon the power connector by the cables of the power source, which may be a tensile load on the order of around 100N. The design of the improved power connector therefore also improved the service lifespan of the power connector due to the reduced likelihood of failure occurring due to this continual tensile load as well as the torsional force applied during tightening of nuts to the shanks 650 of the bolts 640.

In additional embodiments, one or more relief notches (not shown) may be included in the design of the base bodies 680 so as to provide additional mitigation against stress concentration.

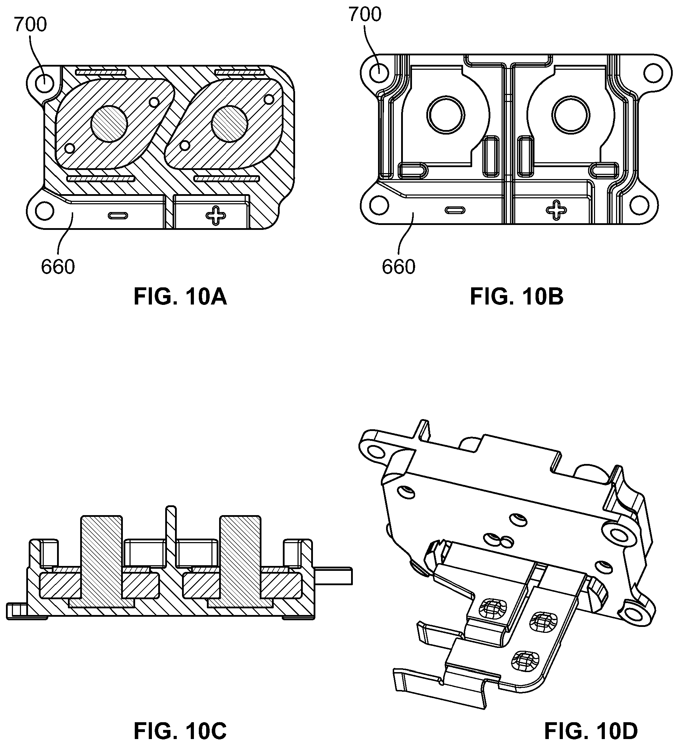

FIGs. 10A, 10B, 10C and 10D show top, bottom, side and three-dimensional views of the improved power connector 600. As can be seen in these figures, one or more holes 700 may be provided in the housing 660 of the improved power connector 600 to allow for a screwed connection of the power connector 600 to the electric assist unit (not shown in these figures).

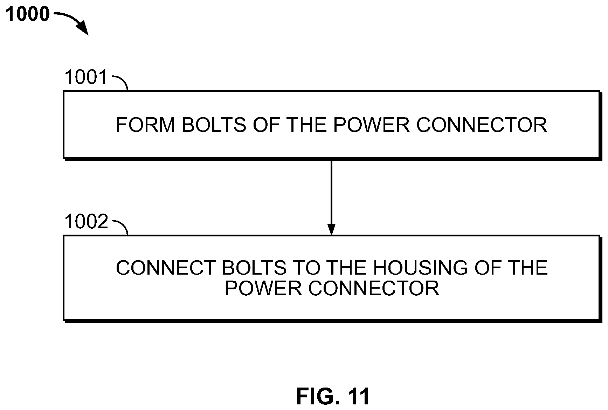

Also provided herein is a method of manufacturing a power connector. This manufacturing method 1000 is explained with reference to FIG. 11. At step 1001, the bolts of the power connector are formed. The base bodies of these bolts have gradual transitions between sides of the base bodies. These bolts may be formed in a single piece out of a single material, for example by casting. Alternatively, the shanks of the bolts may be formed from a first material, such as a steel alloy with high tensile strength for withstanding high torsional loads, and the base bodies of the bolts may be formed from a second material, such as a lower cost steel or aluminum with a lower tensile strength, and the shanks and the base bodies may be assembled together, for example by welding or press-fitting.

At step 1002, the bolts are connected to the housing of the power connector. In an embodiment, the housing of the power connector is formed from a plastic, such as nylon, by overmolding the housing onto the assembled bolts in order to connect the bolts to the housing. In this manner, a cost-efficient, flexible manufacturing process can be implemented to fabricate the improved power connector. In an alternative embodiment, the bolts are attached to the housing by mechanical means, such as by a latching mechanism or by clamping.

Thus, the improved power connector, the manufacturing methods thereof, and other features of the present disclosure provide a number of advantages. These features increase the service life of the improved power connector as compared to other designs of power connectors.

## Claims

1. A power connector for connecting a power source to an electric assist unit of a compressor, the power connector comprising:
first and second bolts (640), wherein the first and second bolts each comprise a base body (680) and a shank (650), the shank having a thread formed on an outer surface thereof;
a housing (660) connected to the first and second bolts, wherein the base bodies of the first and second bolts comprise gradual transitions (681, 682, 683, 684) from each side of the base body to another side, each gradual transition having a radius of curvature, and wherein a diagonal gap (685) of uniform width is present between the base bodies of the first and second bolts, **characterized in that**
a first end of the diagonal gap is located closer to a shank (650) of the first bolt as compared to the shank (650) of the second bolt, and **in that** a second end of the diagonal gap is located closer to the shank (650) of the second bolt as compared to the shank (650) of the first bolt.

2. The power connector of claim 1, wherein each base body comprises four sides and four gradual transitions between the four sides, when viewed along an axis parallel to the shank.

3. The power connector of claim 1 or 2, wherein power frames are connected to the base bodies (680), wherein, optionally, the power frames are brazed or welded to the base bodies.

4. The power connector of any preceding claim, wherein the first and second bolts are formed from metal.

5. The power connector of any preceding claim, wherein the housing is formed, at least in part, from plastic.

6. The power connector of any preceding claim, wherein the uniform width of the diagonal gap has a minimum width of half of the width of connecting nuts (320) that are configured to be screwed onto each shank (650) of the first and second bolts (640).

7. The power connector of claim 6, wherein the width of the diagonal gap is approximately 4mm.

8. The power connector of any preceding claim, wherein at least one of the base bodies comprises a relief notch.

9. An e-assist turbocharger comprising:
a rotating group including a shaft (122), a first wheel member (124) fixed to the shaft; and a second wheel member (136);
an electric assist unit (240) configured to rotate the rotating group;
a power source (250) comprising cables; and
the power connector (600) of any preceding claim arranged to electrically connect cables of the power source to the electric assist unit.

10. The e-assist turbocharger of claim 9, wherein the power source is a battery.

11. The e-assist turbocharger of claim 10, wherein the power source is a 48V battery.

12. The e-assist turbocharger of claim 9, 10 or 11, further comprising a generator (260) arranged to power the power source.

13. A method of forming a power connector in accordance with any of claims 1 to 8, the method comprising:
forming (1001) the bolts of the power connector; and
connecting (1002) the bolts to the housing of the power connector.

14. The method of claim 13, wherein forming the bolts of the power connector comprises forming the shanks and the base bodies separately and then press-fitting the shanks to the base bodies.

15. The method of claim 14, wherein the shanks of the bolts are formed from a different material to the base bodies of the bolts, and / or wherein connecting the bolts to the housing of the power connector comprises overmolding a plastic housing onto the bolts.

## Patentansprüche

1. Stromanschluss zum Anschließen einer Stromquelle an eine elektrische Hilfseinheit eines Kompressors, wobei der Stromanschluss Folgendes umfasst:
einen ersten und einen zweiten Bolzen (640), wobei der erste und der zweite Bolzen jeweils einen Basiskörper (680) und einen Schaft (650) umfassen, wobei der Schaft ein Gewinde aufweist, das an seiner Außenfläche ausgebildet ist;
ein Gehäuse (660), das den ersten und den zweiten Bolzen verbindet, wobei die Basiskörper des ersten und des zweiten Bolzens allmähliche Übergänge (681, 682, 683, 684) von jeder Seite des Basiskörpers zur anderen Seite umfassen, wobei jeder allmähliche Übergang einen Krümmungsradius aufweist, und wobei ein diagonaler Spalt (685) mit gleichmäßiger Breite zwischen den Basiskörpern des ersten und des zweiten Bolzens vorhanden ist, **dadurch gekennzeichnet, dass**
ein erstes Ende des diagonalen Spalts näher an einem Schaft (650) des ersten Bolzens im Vergleich zum Schaft (650) des zweiten Bolzens liegt, und dass ein zweites Ende des diagonalen Spalts näher am Schaft (650) des zweiten Bolzens im Vergleich zum Schaft (650) des ersten Bolzens liegt.

2. Stromanschluss nach Anspruch 1, wobei jeder Basiskörper bei Betrachtung entlang einer parallel zum Schaft verlaufenden Achse vier Seiten und vier allmähliche Übergänge zwischen den vier Seiten umfasst.

3. Stromanschluss nach Anspruch 1 oder 2, wobei Stromrahmen mit den Basiskörpern (680) verbunden sind, wobei die Stromrahmen optional mit den Basiskörpern verlötet oder verschweißt sind.

4. Stromanschluss nach einem der vorhergehenden Ansprüche, wobei der erste und der zweite Bolzen aus Metall ausgebildet sind.

5. Stromanschluss nach einem der vorhergehenden Ansprüche, wobei das Gehäuse zumindest teilweise aus Kunststoff ausgebildet ist.

6. Stromanschluss nach einem der vorhergehenden Ansprüche, wobei die gleichmäßige Breite des diagonalen Spalts eine minimale Breite der Hälfte der Breite von Überwurfmuttern (320) aufweist, die so konfiguriert sind, dass sie auf jeden Schaft (650) des ersten und des zweiten Bolzens (640) aufgeschraubt werden können.

7. Stromanschluss nach Anspruch 6, wobei die Breite des diagonalen Spalts ungefähr 4 mm beträgt.

8. Stromanschluss nach einem der vorhergehenden Ansprüche, wobei mindestens einer der Basiskörper eine Entlastungskerbe umfasst.

9. Elektrisch unterstützter Turbolader, der Folgendes umfasst:
eine rotierende Gruppe, die eine Welle (122), ein erstes Radelement (124), das an der Welle befestigt ist, und ein zweites Radelement (136) enthält;
eine elektrische Hilfseinheit (240), die so konfiguriert ist, dass sie die rotierende Gruppe rotiert;
eine Stromquelle (250), die Kabel umfasst; und
den Stromanschluss (600) nach einem der vorhergehenden Ansprüche, der so angeordnet ist, dass er Kabel der Stromquelle mit der elektrischen Hilfseinheit elektrisch verbindet.

10. Elektrisch unterstützter Turbolader nach Anspruch 9, wobei die Stromquelle eine Batterie ist.

11. Elektrisch unterstützter Turbolader nach Anspruch 10, wobei die Stromquelle eine 48-V-Batterie ist.

12. Elektrisch unterstützter Turbolader nach Anspruch 9, 10 oder 11, der ferner einen Generator (260) umfasst, der so angeordnet ist, dass er die Stromquelle mit Energie versorgt.

13. Verfahren zum Bilden eines Stromanschlusses gemäß einem der Ansprüche 1 bis 8, wobei das Verfahren Folgendes umfasst:
Bilden (1001) der Bolzen des Stromanschlusses; und
Verbinden (1002) der Bolzen mit dem Gehäuse des Stromanschlusses.

14. Verfahren nach Anspruch 13, wobei das Bilden der Bolzen des Stromanschlusses das getrennte Bilden der Schäfte und der Basiskörper und anschließend das Presspassen der Schäfte in den Basiskörper umfasst.

15. Verfahren nach Anspruch 14, wobei die Schäfte der Bolzen aus einem anderen Material ausgebildet sind als die Basiskörper der Bolzen und/oder wobei das Verbinden der Bolzen mit dem Gehäuse des Stromanschlusses das Überformen eines Kunststoffgehäuses auf die Bolzen umfasst.

## Revendications

1. Connecteur de puissance pour connecter une source de puissance à une unité d'assistance électrique d'un compresseur, le connecteur de puissance comprenant :
des premier et second boulons (640), dans lequel les premier et second boulons comprennent chacun un corps de base (680) et une tige (650), la tige ayant un filet formé sur une surface extérieure de celle-ci ;
un logement (660) connecté aux premier et second boulons, dans lequel les corps de base des premier et second boulons comprennent des transitions graduelles (681, 682, 683, 684) de chaque côté du corps de base vers un autre côté, chaque transition graduelle ayant un rayon de courbure, et dans lequel un espace en diagonale (685) de largeur uniforme est présent entre les corps de base des premier et second boulons, **caractérisé en ce que**
une première extrémité de l'espace en diagonale est située plus près d'une tige (650) du premier boulon comparé à la tige (650) du second boulon, et **en ce qu'**une seconde extrémité de l'espace en diagonale est située plus près de la tige (650) du second boulon comparé à la tige (650) du premier boulon.

2. Connecteur de puissance selon la revendication 1, dans lequel chaque corps de base comprend quatre côtés et quatre transitions graduelles entre les quatre côtés, lorsque vu le long d'un axe parallèle à la tige.

3. Connecteur de puissance selon la revendication 1 ou 2, dans lequel des cadres de puissance sont connectés aux corps de base (680), dans lequel, en option, les cadres de puissance sont brasés ou soudés aux corps de base.

4. Connecteur de puissance selon l'une quelconque revendication précédente, dans lequel les premier et second boulons sont en métal.

5. Connecteur de puissance selon l'une quelconque revendication précédente, dans lequel le logement est formé, au moins en partie, en plastique.

6. Connecteur de puissance selon l'une quelconque revendication précédente, dans lequel la largeur uniforme de l'espace en diagonale présente une largeur minimale de moitié la largeur d'écrous de connexion (320) qui sont configurés pour être vissés sur chaque tige (650) des premier et second boulons (640).

7. Connecteur de puissance selon la revendication 6, dans lequel la largeur de l'espace en diagonale est d'approximativement 4 mm.

8. Connecteur de puissance selon l'une quelconque revendication précédente, dans lequel au moins un des corps de base comprend une encoche de dépouille.

9. Turbocompresseur à assistance électrique comprenant :
un groupe rotatif incluant un arbre (122), un premier membre de roue (124) fixé à l'arbre ; et un second membre de roue (136) ;
une unité d'assistance électrique (240) configurée pour faire tourner le groupe rotatif ;
une source de puissance (250) comprenant des câbles ; et
le connecteur de puissance (600) selon l'une quelconque revendication précédente agencé pour connecter électriquement des câbles de la source de puissance à l'unité d'assistance électrique.

10. Turbocompresseur à assistance électrique selon la revendication 9, dans lequel la source de puissance est une batterie.

11. Turbocompresseur à assistance électrique selon la revendication 10, dans lequel la source de puissance est une batterie 48V.

12. Turbocompresseur à assistance électrique selon la revendication 9, 10 ou 11, comprenant en outre un générateur (260) agencé pour alimenter la source de puissance.

13. Procédé de formation d'un connecteur de puissance selon l'une quelconque des revendications 1 à 8, le procédé comprenant :
de former (1001) les boulons au connecteur de puissance ; et
de connecter (1002) les boulons au logement du connecteur de puissance.

14. Procédé selon la revendication 13, dans lequel la formation des boulons du connecteur de puissance comprend de former les tiges et les corps de base séparément puis d'ajuster les tiges aux corps de base de manière serrée.

15. Procédé selon la revendication 14, dans lequel les tiges des boulons sont formées d'un matériau différent des corps de base des boulons, et/ou dans lequel connecter les boulons au logement du connecteur de puissance comprend de surmouler un logement plastique sur les boulons.
